# EUROPEAN PATENT APPLICATION

(11) **EP 3 799 707 A1**
(43) Date of publication of application: **07.04.2021**
(21) Application number: 20181870.5
(22) Date of filing: 24.06.2020
(51) Int. Cl.: A01B 33/02, A01B 39/08, A01B 49/02, A01D 43/12, A01G 3/00

(54) **APPARATUS FOR TREATING A CROP ON LAND, ESPECIALLY ON AGRICULTURAL LAND**

(30) Priority: 26.06.2019 IT 201900002094 U
(71) Applicant: Celli S.P.A., 47122 Forli' (FO) (IT)
(72) Inventor: CELLI, Stefania, 47122 Forli' (FC) (IT)
(74) Representative: Fanzini, Valeriano

(57) **Abstract**

Apparatus (**10**) for treating a crop (**P**) on land (**T**), especially on agricultural land; preferably said treatment consisting in the cutting, and the possible introduction in the same land, of said crop, in order to bring an organic mass to the same land, preferably to provide an organic type cultivation, comprising a support frame (**12**), of the means (**14**) for treating the crop, and in particular the land, preferably adapted to cut the seedlings of the same crop at or near the root system of the same, said means (**14**) for treating the crop and/or land being in particular in the form of rotor means (**141**), respectively rotatable to a respective axis, in particular rotatable with respect to a transverse or horizontal axis, and having corresponding tools (**142**) for treating, in particular cutting, the crop, and especially crushing or shredding a corresponding layer (**S**), preferably surface, of the land itself. Means are provided (**16**) which are adapted to extend the seedlings (**P**) of said crop to ensure that said treatment means (**14**), in particular the respective tools (**142**), operate on the crop, i.e., cut the seedlings (**P**) of the crop, at or near the respective root system (**R**), with said seedlings (**P**) of the same crop in said extended condition.

## Description

The present invention relates to an apparatus for treating a crop on land, especially on agricultural land.

Preferably, the apparatus provides a treatment consisting in the cutting, and in the eventual introduction into the same land, of said crop, in order to bring an organic mass to the same land, preferably to provide an organic type cultivation.

Devices are known for cutting and introducing a crop in the same land in order to bring an organic mass to the same land to provide an organic type cultivation, which apparatuses are in the form of corresponding drills which comprise a support frame for crop treatment means, and in particular of the land, which are in particular in the form of rotor means, respectively rotatable to a respective axis, in particular rotatable with respect to a transverse or horizontal axis, and having corresponding treatment tools, in particular cutting tools, of the crop, and especially crushing or shredding a corresponding, preferably surface, layer of the land, and in which the seedlings of the crop to be cut naturally dwell in the same land, or with the respective stem naturally extending from the roots upwards.

This operating mode, while having its advantages, in that it avoids the use of chemical herbicides for the preparation of the corresponding seed bed, nevertheless does not allow to obtain crop yield results which reach the desired level.

In particular, operating according to the technique known up to now, an excessive number of substantially intact seedlings remain in the land which can then infest and decrease the production yield or in any case damage the subsequent crop which is actually intended to be cultivated.

Furthermore, with the use of these already known apparatuses, a working speed is obtained, i.e., the forward speed of the apparatus on the land, which is not particularly high, and which is normally around 2-3 km/h, the whole therefore with an operating efficiency which is lower than non-organic crops which use chemical herbicides.

Moreover, the need is felt in the field to have land available with a good structure, in particular such as to allow an advantageous retention of water around the roots of the crop.

With the present invention it is wished to propose a new solution and/or an alternative to the solutions known up to now and in particular it is proposed to overcome one or more of the drawbacks or problems referred to above, and/or to satisfy one or more requirements referred to above and/or in any case experienced in the art, and in particular which can be deduced from the above.

An apparatus is therefore provided for treating a crop on land, especially on agricultural land; preferably said treatment consisting of the cutting, and the possible introduction into the same land, of said crop, in order to bring an organic mass to the same land, preferably to provide an organic type cultivation; comprising a support frame, means for treating the crop, and in particular the land, preferably adapted to cut the seedlings of the same crop at or near the root system of the same, said means for treating the crop and/or land being in particular in the form of rotor means, respectively rotatable to a respective axis, in particular rotatable with respect to a transverse or horizontal axis, and having corresponding treatment tools, in particular cutting tools, of the crop, and especially crushing or shredding tools of a corresponding layer, preferably surface, of the land itself, characterized in that means are provided which are adapted to extend the seedlings of said crop to ensure said treatment means, in particular the respective tools, operate on the crop, i.e., cut the seedlings of the crop at or near the respective root system, with said seedlings of the same crop in said extended condition.

In this way, an organic composting mass of the land is obtained which is completely natural and which does not run the risk of infesting the subsequent crop or cultivation.

This and other innovative aspects are, however, set forth in the appended claims, the technical characteristics of which can be found, together with corresponding advantages achieved, in the following detailed description, illustrating a purely non-limiting example of the embodiment of the invention, which is made with reference to the appended drawings, in which:

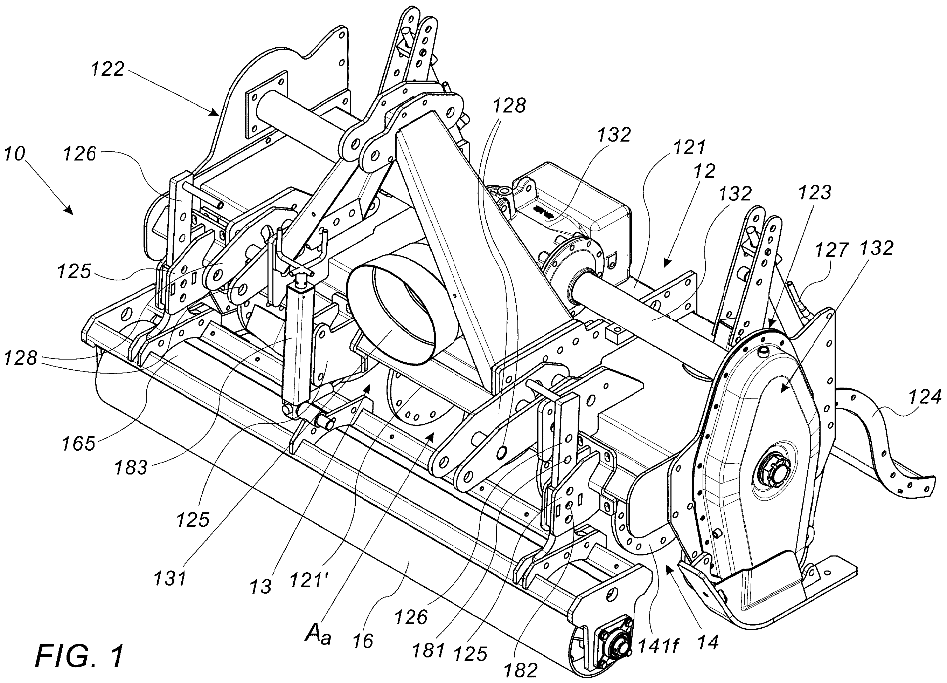

- figure 1 a illustrates a schematic perspective view of a preferred apparatus embodiment according to the present invention;

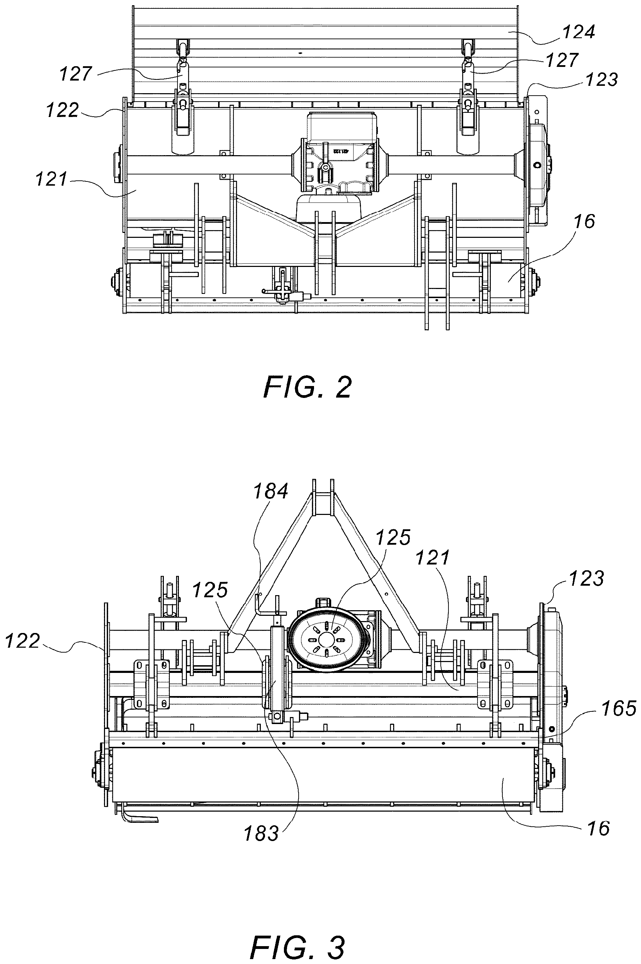

- figure 2 illustrates a schematic top plan view of the preferred apparatus embodiment according to the present invention;
- figure 3 illustrates a schematic elevational front view of the preferred apparatus embodiment according to the present invention;
- figure 4A illustrates a schematic elevational side view of the preferred apparatus embodiment according to the present invention;
- figure 4B illustrates an enlarged detail of figure 4A;
- figure 5 illustrates a schematic elevational side view of the preferred apparatus embodiment according to the present invention, with a particular illustration of the condition of the rear door, or fan, in the open condition;
- figure 6 illustrates a schematic perspective view of an enlarged detail, particularly illustrating the means for conveying the material exiting the apparatus, of the preferred apparatus embodiment according to the present invention.

The attached figures illustrate a preferred apparatus embodiment 10 for treating a crop P on a land T, in particular on an agricultural land; preferably said treatment consisting in the cutting, and the possible introduction into the same land, of said crop, in order to bring an organic mass to the same land, preferably to provide a subsequent organic type cultivation, for example suitably usable for crops such as hops, vegetables, vineyards or others.

The apparatus 10 comprises a support frame 12, means 14 for treating the crop, and in particular the land, preferably adapted to cut the seedlings of the same crop at or near the root system of the same.

As illustrated, said means 14 for treating the crop and/or land are in particular in the form of rotor means 141, respectively rotatable to a respective axis, in particular rotatable with respect to a transverse or horizontal axis, and having corresponding treatment tools 142, in particular cutting tools, of the crop, and especially crushing or shredding tools of a corresponding layer S, preferably surface, of the same of the land, in particular so as to prepare a corresponding seed bed.

Advantageously, means are provided 16 which are adapted to extend the seedlings P of said crop to ensure that said treatment means 14, in particular the respective tools 142, operate on the crop, i.e., cut the seedlings P of the crop at or near the respective root system R, with said seedlings P of the same crop in said extended condition.

In this way, an organic composting mass is obtained which is completely natural and which does not run the risk of infesting the subsequent crop or cultivation.

Advantageously, as can be seen from the figures, in practice, means 16 are provided in the apparatus 10 which are adapted to bend the seedlings P of said crop on the land T, i.e., parallel to the same land, so that said treatment means 14, in particular the respective tools 142, operate on the crop, i.e., cut the seedlings P of the crop at or near the respective root system R, with said seedlings of the same crop which are in said bent condition on the land T.

In this way, an organic composting mass is obtained which is completely natural and which does not run the risk of infesting the subsequent crop or cultivation.

Advantageously, as can be seen from the figures, said means 16 for extending and/or bending the seedlings P of the crop are supported by said frame 12 supporting the apparatus.

With advantage, as can be seen from the figures, said means 16 for extending and/or bending the seedlings P of the crop are arranged, according to the direction of travel, in front of said crop treatment means 14.

With particular advantage, as can be seen from the figures, said means 16 for extending and/or bending the seedlings P of the crop are provided at a longitudinal distance from the crop treatment means 14, such that the same means 16 for extending and/or bending the seedlings P of the crop engage said seedlings P of the crop, in particular at the respective apex end A, when the same said means 14 for treating the crop engage the same seedlings P at the base of the same seedlings P, i.e., at or near the root system of the same seedlings P, in particular by cutting the same seedling cleanly with respect to the root R.

In this way, a guaranteed cut of the plant mass is obtained, without the risk that the same can then excessively infest the subsequent crop.

Advantageously, as can be seen from the figures, said means 16 for extending and/or bending the seedlings P of the crop are such as to engage the respective seedlings P in a point which has a longitudinal distance D, from the point of engagement of the same seedlings P from said crop treatment means 14, which is between 5 cm and 35 cm and preferably around 25 cm.

In this way, a sure cut of the composting plants is obtained, which can thus have a preferred or optimal height or maturation, in particular between 10cm and 40cm. In this way, optimal composting for the corresponding land is guaranteed.

Advantageously, as can be seen from the figures, said means 16 for extending and/or bending the seedlings P of the crop are in the form of corresponding means 16 rotatable on the crop P, provided on the land T, and are preferably in the form of a roller 16, in particular transversely extended with respect to said apparatus 10.

With advantage, as can be seen from the figures, said rotatable means 16 for extending and/or bending the seedlings P of the crop, or the same roller 16, are rotatably supported, in particular idly rotatable, from said frame 12 supporting the apparatus.

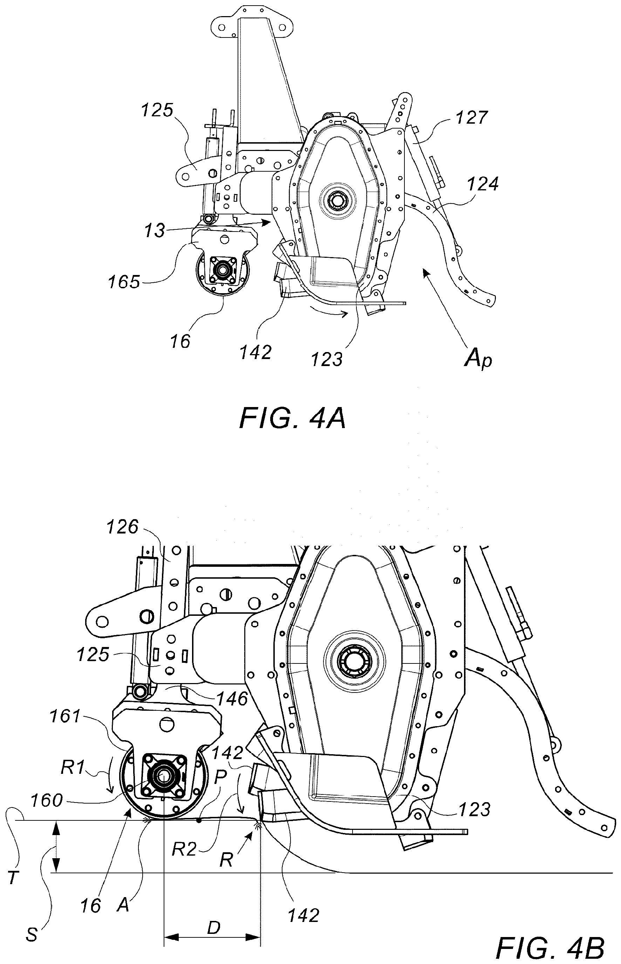

In particular, as can be seen from the figures, the extending and/or bending roller 16 has a respective axis of rotation 160, in particular horizontal, or substantially horizontal, in use and an external rolling surface 161 on the land T, according to the angular direction shown by the arrow R1 in figure 4B, while the land treatment means 14, i.e., the respective rotor 141, rotate according to the angular direction shown by the arrow R2 in the same figure 4B, which direction of rotation of the land treatment means 14 therefore agrees with the rotation of said roller 16, which idly rotates advancing on the same land T.

Advantageously, as can be seen from the figures, said means 16 for extending and/or bending the seedlings P of the crop are in the form of a corresponding metal roller 16, i.e., they can also otherwise be in the form of a corresponding roller having an engagement profile 161 of the seedlings or land which is externally rubberised.

Advantageously, as can be seen from the figures, the frame 12 comprises a hood, or body, 121 which defines between the lower or inner surface thereof and the land a work chamber 13 of said treatment means and which extends transversely between corresponding lateral sides 122, 123 of the frame, which rotatably support said rotor 141 of said means 14 for treating the crop, laterally delimiting said work chamber 13.

As can be seen from the figures of said hood, or body, 121, it has a generally arcuate trend, turning the concavity towards the land T.

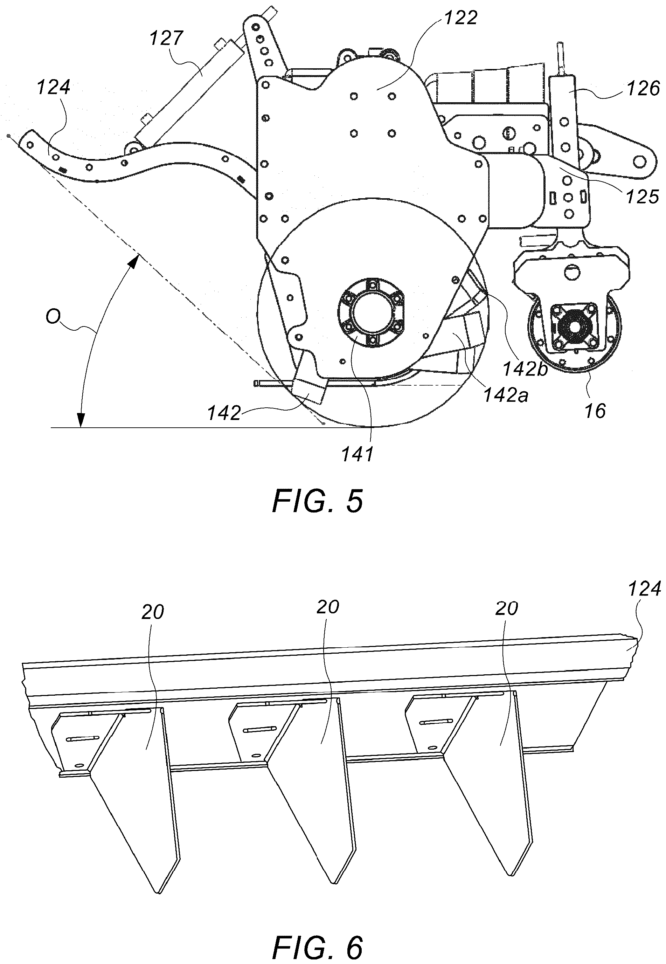

With particular advantage, as can be seen from the figures, the hood or body 121 substantially defines with the land a front opening for introducing the crop into the work chamber 13 and a rear opening for expelling the crop from the same work chamber 13, the latter being closed through a respective door, or fan, 124 movable with respect to the hood or body 121 between at least one closed position of said rear opening, illustrated in figure 4A, in particular used during the transfer, for example on the road, of the same apparatus, and an open position of the same rear opening, in the operating condition of the apparatus, shown in figure 5, and in which, preferably, it has an open angle O with respect to the land which is substantially equal to 45°.

In this way, a mass emerging from the apparatus is obtained, at the rear, which is particularly soft, i.e., such as to be optimal for the cultivation, in particular organic, of the subsequent crop.

In particular, said rear door 124 is operable through corresponding cylinders 127, 127 between said closed position and the corresponding maximum open position, which actuating cylinders 127 are connected to the fixed frame, or to said hood, or body, 121 and have the respective mobile end which is connected to the outside of the same door 124.

Advantageously, as can be seen from the figures, said means 16 for extending and/or bending the seedlings P of the crop, and in particular said rotating roller 16, have a width corresponding to the width of said means 14 for treating the crop, in particular of said covering hood 121 of said frame 12 supporting the apparatus.

With advantage, as can be seen from the figures, said means 16 for extending and/or bending the seedlings P of the crop are supported by corresponding arm means, in particular a first, a second and a third arm 125, 125 and 125, extending longitudinally and protruding from the front of said frame 12 supporting the apparatus, in particular protruding from the front with respect to the front end or edge 121' of said covering hood 121 of said frame 12 supporting the apparatus.

Advantageously, as can be seen from the figures, said means 16 for bending the seedlings of the crop can be positioned in height with respect to the land, and are in particular supported by corresponding stems 126, preferably vertical, in particular extending from said arm means 125 protruding from the front of the frame 12.

As illustrated, said means 16 for extending and/or bending the seedlings P of the crop are carried freely rotatable by a corresponding transversely extended frame 165, at the, i.e. fixed to, the lower end of said vertical stems 126, protruding downwards from the same support arm means 125.

Advantageously, as can be seen from the figures, in practice, said means 16 for extending and/or bending the seedlings P of the crop are arranged according to the longitudinal direction of advancement of the apparatus in front of said hood, or body, 121 said frame 12 supporting the apparatus defining the work chamber 13 of the apparatus.

Advantageously, as can be seen in particular from figure 5, the respective land treatment tool 142 is fixed with respect to said rotor 141, in particular to a corresponding flange 141f protruding peripherally with respect to the same rotor and has a corresponding profile which defines a portion 142a connecting to the rotor 141 and an engagement portion 142b of the crop or land which have an angle therebetween, and which tools are configured and arranged in such a respective way to the rotor to impact the same land without risking compacting it, thus obtaining a particularly aerated and soft land and particularly suitable for organic cultivation.

With advantage, as can be seen from the figures, arm means are provided, in particular in the form of a first and a second arm 128, 128, of attachment to the machine, or tractor, towing the present apparatus 10, which arm means have a length of around 50 cm, starting from the corresponding front edge 121' of said covering hood 121 of said frame 12 supporting the apparatus.

Advantageously, as can be seen from the figures, means 18 for adjusting the height of said means 16 for extending and/or bending the seedlings P of the crop are also provided.

In this way, the working depth of said means 14 for treating the crop or land can be adjusted as desired.

With particular advantage, as can be seen from the figures, said means 18 for adjusting the height of said means 16 for extending and/or bending the seedlings P of the crop comprise means 181, 182 for connecting to different heights of said stems 126, supporting said means 16 for extending and/or bending the seedlings P of the crop, with said arm means 125 protruding from said frame 12 supporting the apparatus.

Advantageously, as can be seen from the figures, said means 181, 182 for connecting to different heights of said stems 126, supporting said means 16 for extending and/or bending the seedlings P of the crop, with said arm means 125 protruding from said frame 12 supporting the apparatus, comprise corresponding pins, not particularly illustrated in the attached figures, which insert into corresponding holes 181, 182 provided respectively in said stems 126, supporting said means 16 for extending and/or bending the seedlings P of the crop, and in said arm means 125 protruding from said frame 12 supporting the apparatus.

Advantageously, as can be seen from the figures, said means 18 for adjusting the height of said means 16 for extending and/or bending the seedlings P of the crop comprise height activation means 183 of said means 16 for extending and/or bending the seedlings P of the crop, which preferably comprise a corresponding actuator 183, in particular in the form of a manual actuator, controlled by a corresponding crank 184, which extends between a corresponding arm 125 protruding from said frame 12 supporting the apparatus and the frame 165 supporting said means 16 for extending and/or bending the seedlings P of the crop.

With advantage, as can be seen from the figures, means are provided, not particularly illustrated in the attached figures, for damping said means 16 for extending and/or bending the seedlings P of the crop.

In this way, a particularly easy and stable speed is obtained for said apparatus 10 on the land.

Advantageously, said crop treatment means 14 are in the form of a milling tool of the same land.

Advantageously, said land treatment tools 142 work a surface layer of land which has a depth between 3 cm and 13 cm, preferably around 5-6 cm.

With particular advantage, as can be seen from the figures, means 131 are provided which define a power take-off from the corresponding machine, or tractor, towing the present apparatus 10, which protrudes above said frame, or hood, supporting the apparatus.

With advantage, as can be seen from the figures, means 132 are provided for transmitting motion to said crop treatment means 14, or corresponding rotor 141, which respectively comprise a transverse transmission shaft, emerging from a corresponding gear box, which transmission shaft drives a corresponding lateral transmission, provided on the corresponding lateral side 123 of the frame 12.

Advantageously, as can be seen from the figures, the rotation speed of said crop treatment means 14, or milling tool, is between 230 rpm and 310 rpm.

With particular advantage, the travel speed of the apparatus 10 on the land is around 6-8 km/h.

With advantage, as can be seen from figure 6, according to a second version of the present apparatus, means 20 are provided for conveying the material exiting said apparatus 10.

Advantageously, as can be seen from figure 6, said means 20 for conveying the material exiting said apparatus 10 comprise a plurality of longitudinal tabs transversely spaced from each other and preferably projecting internally from said rear opening door 124.

In practice, as is evident, the technical characteristics illustrated above allow, individually or in a respective combination, achieving one or more of the following advantageous results:
- an organic composting mass is obtained which is completely natural and which does not run the risk of infesting the subsequent crop or cultivation.
- a higher working speed is obtained with respect to the previous treatment activities of the corresponding crops;
- a sure cut of the composting plants is obtained, which can thus have a preferred or optimal height or maturation, in particular between 10cm and 40cm;
- a vegetable mass is obtained which provides optimal composting to the land;
- a mass emerging from the rear of the apparatus is obtained, which is particularly soft, i.e. such as to be particularly appreciated for the cultivation, in particular organic, of the subsequent crop;
- the land is worked without the risk of compacting it, thus obtaining a particularly aerated land which is particularly suitable for organic type cultivation;
- the working depth of said means for treating the crop or land can be adjusted as desired;
- a particularly easy and stable speed is obtained for said apparatus on the land;
- an organic mass is obtained which allows to fertilize and give a better structure to the land, in particular a better retention of water around the root of the crop.

The present invention is susceptible to evident industrial application. The person skilled in the art will also be able to imagine numerous modifications and/or variations to be made to the same invention, while remaining within the scope of the inventive concept, as extensively explained. Moreover, the person skilled in the art will be able to imagine further preferred embodiments of the invention which include one or more of the above illustrated characteristics of the preferred embodiment. Moreover, it must also be understood that all the details of the invention can be replaced by technically equivalent elements.

## Claims

1. Apparatus (**10**) for treating a crop (**P**) on land (**T**), especially on agricultural land; preferably said treatment consisting of the cutting, and the possible introduction into the same land, of said crop, in order to bring an organic mass to the same land, preferably to provide an organic type cultivation; comprising a support frame (**12**), means (**14**) for treating the crop, and in particular the land, preferably adapted to cut the seedlings of the same crop at or near the root system of the same, said means (**14**) for treating the crop and/or land being in particular in the form of rotor means (**141**), respectively rotatable to a respective axis, in particular rotatable with respect to a transverse or horizontal axis, and having corresponding treatment tools (**142**), in particular cutting tools, of the crop, and especially crushing or shredding tools of a corresponding layer (**S**), preferably surface, of the land itself, **characterized in that** means are provided (**16**) which are adapted to extend the seedlings (**P**) of said crop to ensure said treatment means (**14**), in particular the respective tools (**142**), operate on the crop, i.e., cut the seedlings (**P**) of the crop at or near the respective root system (**R**), with said seedlings (**P**) of the same crop in said extended condition.

2. Apparatus according to claim **1** or according to the precharacterizing part of claim **1, characterized in that** means are provided (**16**) which are adapted to bend the seedlings (**P**) of the crop on the land (**T**) to ensure that said treatment means (**14**), in particular the respective tools (**142**), operate on the crop, i.e., cut the seedlings (**P**) of the crop at or near the respective root system (**R**), with said seedlings of the same crop in said bent condition on the land (**T**).

3. Apparatus according to any one of the preceding claims, **characterized in that** said means (**16**) for extending and/or bending the seedlings (**P**) of the crop are supported by said frame (**12**) supporting the apparatus.

4. Apparatus according to any one of the preceding claims, **characterized in that** said means (**16**) for extending and/or bending the seedlings (**P**) of the crop are arranged, according to the direction of travel, in front of said crop treatment means (**14**).

5. Apparatus according to any one of the preceding claims, **characterized in that** said means (**16**) for extending and/or bending the seedlings (**P**) of the crop are provided at a longitudinal distance from said means (**14**) for treating the crop, such that the same means (**16**) for extending and/or bending the seedlings (**P**) of the crop engage said seedlings (**P**) of the crop, in particular at the respective apex end (**A**), when the same means (**14**) for treating the crop engage the same seedlings (**P**) at the base of the same seedlings (**P**), i.e., at or near the root system of the same seedlings (**P**).

6. Apparatus according to any one of the preceding claims, **characterized in that** said means (**16**) for extending and/or bending the seedlings (**P**) of the crop are such as to engage the respective seedlings (**P**) at a point with a longitudinal distance (**D**), from the engagement point of the same seedlings (**P**) by said means (**14**) for treating the crop, which is between 5 cm and 35 cm and preferably around 25 cm.

7. Apparatus according to any one of the preceding claims, **characterized in that** said means (**16**) for extending and/or bending the seedlings (**P**) of the crop are in the form of corresponding means (**16**) rotatable on the crop (**P**), provided on the land (**T**), and are preferably in the form of a roller (**16**), in particular transversely extended with respect to said apparatus (**10**).

8. Apparatus according to claim **7, characterized in that** said rotatable means (**16**) for extending and/or bending the seedlings (**P**) of the crop, i.e., the same roller (**16**), are rotatably supported, in particular idly rotatable, by said frame (**12**) supporting the apparatus.

9. Apparatus according to any one of the preceding claims, **characterized in that** said means (**16**) for extending and/or bending the seedlings (**P**) of the crop are in the form of a corresponding metal roller (**16**), i.e., they are in the form of a corresponding roller having an outer engagement profile (**161**) of the seedlings or land which is externally rubberised.

10. Apparatus according to any one of the preceding claims, **characterized in that** the frame (**12**) comprises a hood, or body, (**121**) which defines between the lower or inner surface thereof and the land a work chamber (**13**) of said treatment means and which extends transversely between corresponding lateral sides (**122, 123**) of the frame which rotatably support said rotor (**141**) of said means (**14**) for treating the crop, laterally delimiting said work chamber (**13**).

11. Apparatus according to any one of the preceding claims, **characterized in that** the hood, or body, (**121**) basically defines with the land a front opening for introducing the crop into the work chamber (**13**) and a rear opening to expel the crop from the same work chamber (**13**), the latter being closed by a respective door, or fan, (**124**) movable with respect to the hood or body (**121**) between at least a closed position of said rear opening and an open position of the same rear opening, in the operating work condition of the apparatus, and in which, preferably, it has an open angle (**O**) with respect to the land which is substantially equal to 45°.

12. Apparatus according to any one of the preceding claims, **characterized in that** said means (**16**) for extending and/or bending the seedlings (**P**) of the crop, and in particular said rotating roller (**16**), have a width corresponding to the width of said means (**14**) for treating the crop, in particular of the covering hood (**121**) of said frame (**12**) supporting the apparatus.

13. Apparatus according to any one of the preceding claims, **characterized in that** said means (**16**) for extending and/or bending the seedlings (**P**) of the crop are supported by corresponding arm means, in particular a first, a second and a third arm (**125, 125, 125**), extending longitudinally and protruding from the front of said frame (**12**) supporting the apparatus, in particular protruding from the front with respect to the front end, or edge, (**121'**) of the covering hood (**121**) of said frame (**12**) supporting the apparatus.

14. Apparatus according to any one of the preceding claims, **characterized in that** arm means are provided, in particular in the form of a first and a second arm (**128, 128**)**,** of attachment to the machine, or tractor, towing the present apparatus (**10**), which arm means have a length of around 50 cm, starting from the corresponding front edge (**121**') of said covering hood (**121**) of said frame (**12**) supporting the apparatus.

15. Apparatus according to any one of the preceding claims, **characterized in that** said means (**16**) for extending and/or bending the seedlings of the crop can be positioned in height with respect to the land, and are in particular supported by corresponding stems (**126**), preferably vertical, in particular extending from said arm means (**125**) protruding from the front of the frame (**12**).

16. Apparatus according to any one of the preceding claims, **characterized in that** said means (**16**) for extending and/or bending the seedlings (**P**) of the crop are arranged according to the longitudinal direction of advancement of the apparatus in front of said hood, or body, (**121**) said frame (**12**) supporting the apparatus defining the work chamber (**13**) of the apparatus.

17. Apparatus according to any one of the preceding claims, **characterized in that** means (**18**) for adjusting the height of said means (**16**) for extending and/or bending the seedlings (**P**) of the crop are provided.

18. Apparatus according to claim **17, characterized in that** said means (**18**) for adjusting the height of said means (**16**) for extending and/or bending the seedlings (**P**) of the crop comprise means **(181, 182)** for connecting to different heights of said stems (**126**), supporting said means (**16**) for extending and/or bending the seedlings (**P**) of the crop, with said arm means (**125**) protruding from said frame (**12**) supporting the apparatus.

19. Apparatus according to claim **18, characterized in that** said means **(181, 182)** for connecting to different heights of said stems (**126**), supporting said means (**16**) for extending and/or bending the seedlings (**P**) of the crop, with said arm means (**125**) protruding from said frame (**12**) supporting the apparatus comprise corresponding pins which insert into corresponding holes (**181, 182**) provided respectively in said stems (**126**), supporting said means (**16**) for extending and/or bending the seedlings (**P**) of the crop, and in said arm means (**125**) protruding from said frame (**12**) supporting the apparatus.

20. Apparatus according to any one of preceding claims **17 to 19, characterized in that** said means (**18**) for adjusting the height of said means (**16**) for extending and/or bending the seedlings (**P**) of the crop comprise height activation means (**183**) of said means (**16**) for extending and/or bending the seedlings (**P**) of the crop, which preferably comprise a corresponding actuator (**183**), in particular in the form of a manual actuator, controlled by a corresponding crank (**184**), which extends between a corresponding arm (**125**) protruding from said frame (**12**) supporting the apparatus and the frame (**165**) supporting said means (**16**) for extending and/or bending the seedlings (**P**) of the crop.

21. Apparatus according to any one of the preceding claims, **characterized in that** damping means of said means (**16**) for extending and/or bending the seedlings (**P**) of the crop are provided.

22. Apparatus according to any one of the preceding claims, **characterized in that** said means (**14**) for treating the crop are in the form of a milling tool of the same land.

23. Apparatus according to any one of the preceding claims, **characterized in that** said tools (**142**) for treating the land work a surface layer of land which has a depth between 3 cm and 13 cm, preferably around 5-6 cm.

24. Apparatus according to any one of the preceding claims, **characterized in that** means are provided (**131**) defining a power take-off from the corresponding machine, or tractor, towing the present apparatus (**10**), which protrudes above said frame, or body, supporting the apparatus.

25. Apparatus according to any one of the preceding claims, **characterized in that** means are provided (**132**) for transmitting motion to said means (**14**) for treating the crop, or corresponding rotor (**141**), which respectively comprise a transverse transmission shaft, emerging from a corresponding gear box, which transmission shaft drives a corresponding lateral transmission, provided on the corresponding lateral side 123 of the frame 12.

26. Apparatus according to any one of the preceding claims, **characterized in that** the rotation speed of said means (**14**) for treating the crop, or milling tool, is between 230 rpm and 310 rpm.

27. Apparatus according to any one of the preceding claims, **characterized in that** the operating speed of the apparatus (**10**) on the land is around 6-8 km/h.

28. Apparatus according to any one of the preceding claims, **characterized in that** means are provided (**20**) for conveying the material exiting said apparatus (**10**).

29. Apparatus according to claim **28, characterized in that** said means (**20**) for conveying the material exiting said apparatus (**10**) comprise a plurality of longitudinal tabs transversely spaced from each other and preferably internally protruding from said rear opening door (**124**).

30. Apparatus **characterized in that** it is respectively according to any of the preceding claims and/or as described and illustrated with reference to the attached drawings.
